# EUROPEAN PATENT SPECIFICATION

(11) **EP 2 777 922 B1**
(45) Date of publication and mention of the grant of the patent: **03.08.2016**
(21) Application number: 14159786.4
(22) Date of filing: 14.03.2014
(51) Int. Cl.: B29D 30/06, B29C 33/38, B29C 67/00

(54) **Method for manufacturing tire molds**
Verfahren zur Herstellung von Reifenformen
Procédé de fabrication de moules pour pneus

(30) Priority: 15.03.2013 US 201313836749
(43) Date of publication of application: 17.09.2014
(73) Proprietor: Michelin Recherche et Technique S.A., 1763 Granges-Paccot (CH); Compagnie Générale des Etablissements Michelin, 63000 Clermont-Ferrand (FR)
(72) Inventor: Woloszyn, Thomas, GREENVILLE, SC 29605 (US); Hix, Andrew, GREENVILLE, SC 29605 (US); Hatley, Eric, GREENVILLE, SC 29605 (US)
(74) Representative: Casalonga

(56) References cited:
- EP-A1- 2 481 545
- WO-A1-98/58786
- WO-A1-99/48674
- GB-A- 2 312 184
- JP-A- 2005 262 616
- US-A- 2 736 924
- US-A1- 2011 042 858
- US-A1- 2011 049 754

## Description

### BACKGROUND OF THE INVENTION

This invention relates generally to the manufacture of tire-related molds, and more specifically, to the manufacture of molds for molding a tire or tire tread.

### DESCRIPTION OF THE RELATED ART

Tires, as well as treads for forming retreaded tires, are formed by way of a molding operation. In particular instances, tire molds are formed according to a multi-step manufacturing process. In this process, a computer-aided design ("CAD") model of a tire tread area is generated. Subsequently, the CAD model is communicated to a computer numerical control ("CNC") machine, which machines material from a larger base structure to form a rigid physical structure comprising a model of at least a portion of the tire tread, the physical structure being shaped to represent the CAD model. Additional elements may be added to the physical model to form any additional tread void features, such as non-demoldable features and negative draft features. Negative draft features may comprise, for example, grooves having a width that increases with increasing tread depth, where one or more sidewalls of the groove are characterized as having a negative draft angle. Thereafter, the physical model of the tire tread area is used to form an elastic tread mold model of a mold segment by way of a molding process using an elastomeric material, such as silastic. This elastic mold model is then used to create a plaster model of the tire tread area. Finally, a portion of the mold is then formed in a molding process from the plaster model.

Document EP 2481545 - A shows a device to cast a plaster core segment of a tire mould, the device consisting of a solid fixation base and an arc-shaped elastic matrix, which bears the tire mould tread pattern.
This elastic matrix is only fixated to the fixation base after the tire mould tread pattern is already formed by the 3D print technology.

Document WO 99/48674 - A teaches forming mould elements for a casting model using a 3D model, using RP (Rapid Prototyping) techniques. This document teaches the use of various materials for forming mould elements and various hardening techniques for making the mould solid.

Because such a process for forming a tire mold element requires numerous steps and the formation of numerous structures, the process of forming a tire mold is a costly and time consuming endeavor. Therefore, there is a need to improve the process for manufacturing tire molds by reducing the quantity of steps and therefore the time and cost required to manufacture such molds.

### SUMMARY OF THE INVENTION

The present invention includes a method as defined in claim 1, for developing and forming a tire-related mold configured to at least mold a portion of a tire tread. Particular embodiments of such a method, as defined in the dependent claims, include creating a digital model representing a three-dimensional structure comprising a tread model molding member, the tread model molding member at least partially defining a molding cavity for forming a corresponding tire tread model. The three-dimensional structure comprising the tread model molding member is formed automatically using the digital model, the structure being formed by building the structure from one or more materials, the one or more materials including an elastic material such that the formed structure is an elastic structure. A tread model is molded using the tread model molding member, while a tread molding element for forming at least a portion of a tread is molded from the tread model.

The foregoing and other objects, features and advantages of the invention will be apparent from the following more detailed descriptions of particular embodiments of the invention, as illustrated in the accompanying drawings wherein like reference numbers represent like parts of the invention.

### BRIEF DESCRIPTION OF THE DRAWINGS

FIG. **1** is a perspective view of a digital, computer generated model of a tire tread design in accordance with an embodiment of the invention.
FIG. **2** is a perspective view of a digital, computer generated model of a three-dimensional tread model molding member for formation of the tread model shown in FIG. 1 in accordance with an embodiment of the invention.
FIG. **3** is a sectioned view of the model of FIG. **2** taken along plane **3-3.**
FIG. **4** is a sectioned view of a tread model molding member automatically formed in accordance with particular embodiments of the inventive methods disclosed herein.
FIG. **5** is a perspective view of the tread model molding member of FIG. **4** shown having sipe-forming elements added to the molding member after automatic formation thereof in accordance with particular embodiments of the inventive methods disclosed herein.
FIG. **6** is a perspective view of a tread model molded from the tread model molding member of FIG. **5****.**
FIG. **7** **is** a perspective view of a tread molding element for use in a tire-related mold in tire-related mold, the tread molding element being molded from the tread model of FIG. **6****.**

### DETAILED DESCRIPTION OF PARTICULAR EMBODIMENTS

The present invention comprises improved methods and apparatus for developing and manufacturing a tire-related mold. As mentioned above, the current process for creating a tire-related mold is labor intensive and time consuming. Therefore, there is a need to provide a more efficient and cost-effective process, while also improving the quality and accuracy of the final mold.

As used herein, a tire-related mold includes a cavity for forming at least a portion of a tire tread and an outer, ground-engaging side of the tread, where the cavity his referred to as a tread molding cavity. Furthermore, when a tread includes any void features, such as grooves and/or sipes, the tread molding cavity includes projections for forming void features within the tread thickness.

Because the tire tread may be molded with a tire, in particular embodiments, the tire-related mold comprises a tire mold used to form a molded tire. In other embodiments, the tire-related mold comprises a tire tread mold, such as may be used to form a retreaded tire tread. In any case, any such tire-related mold includes a molding cavity for molding a tread. In instances when the tread is designed to include void features, such as grooves and/or sipes, for example, the cavity includes one or more projections for forming any such void features. It is understood that the molding cavity of any such tire-related mold may be formed by one or more mold members, where each such member includes a molding cavity to collectively form the molding cavity of the tire-related mold. The mold members may form, for example, a segment of the mold, which maybe correspond to a pitch of the tire tread. Accordingly, a mold member includes a molding cavity extending a full or partial width of the tread to be formed, as well as a full or partial length of the tread to be formed.

The present invention includes methods for developing and forming a tire-related mold configured to at least mold a portion of a tire tread. In particular embodiments, such methods include creating a digital model representing a three-dimensional structure comprising a tread model molding member, the tread model molding member at least partially defining a molding cavity for forming a corresponding tire tread model. In performing this step, it is understood that a digital model is created to represent a three-dimensional structure comprising a molding member for use in molding a physical tire tread model (where the tire tread model is also referred to as a "tread model"). The molding member operates as a negative mold member, having a cavity for forming the tire tread model. Once the tire tread model is formed from the molding member, the tread model operates as a positive mold member for forming at least a tread-molding portion of a tire-related mold, where the tire-related mold is configured to at least mold a portion of a tire tread. Therefore, the tread model generally represents at least a portion of a tire tread to be molded. As noted above, because a tire tread may have a length and a width extending arcuately or linearly, the digital model of the tread model, as well as the tread model, the tread model molding member, and the tread-forming portion of a tire-related mold member are designed and configured to form any such tread.

It is understood that a digital model connotes a computer generated model, where the digital model may be created by any process or software program for use with any processor-based computing device known to one of ordinary skill in the art for creating a digital model representing a three-dimensional structure. In particular embodiments, for example, the digital model is created using a CAD software program comprising a series of programmed instructions stored on a memory storage device, the memory storage device being in operable communication with a programmable logic controller having a logic processor capable of executing the instructions. The controller may be programmed by any known graphical or text language. Likewise, the logic processor may comprise any known processor capable of executing programmed instructions and calculations for generating a digital model representing a three-dimensional structure using any stored data and/or data input received from a user. Such a processor may comprise, for example, a microprocessor. It is understood that programmed instructions, data, input, and output may be stored in any known memory storage device, including any electronic or magnetic storage device such as a hard disk drive, an optical storage device, or flash memory. The digital model may be stored on the memory storage device in any file format capable of representing a three-dimensional structure, such as the surface geometry of the structure. Exemplary file formats includes any CAD file format.

In particular embodiments, the step of forming automatically a digital model of the tread model molding member includes first creating a digital model of a tire tread to be molded and subsequently creating the digital model of the tire tread model based upon the digital model of the tire tread. In such instances, this is achievable since the tread model molding member generally represents a negative relief of the tire tread. Since the tread model also represents the tire tread to be molded, it can be said that a digital model of the tread model may be employed in lieu of a digital model of the tire tread for the purpose of generating the digital model of the tread model molding member. It is understood that the digital model of the tire tread or the tire tread model may be created according to any process or software program contemplated above in association with creating a digital model of the tread model molding member.

Particular embodiments of the method for developing and forming a tire-related mold include the step of forming automatically the three-dimensional structure comprising the tread model molding member using the digital model, the structure being formed by building the structure from one or more materials, the one or more materials including an elastic material such that the formed structure is an elastic structure. In performing this step, an elastic, three-dimensional physical structure comprising the tread model molding member is automatically built based upon the digital model previously created. This is opposed to removing material from a larger structure to shape and form the physical structure, such as when using a CNC machine. Accordingly, "building" means automatically constructing or assembling the tread model molding member from one or more materials. Because the structure is built from one or more materials including an elastic material, the tread model molding member is an elastic structure capable of deforming as a rigid tread model is demolded from the structure in a later step of the method. Because the tread model molding member is designed to generally represent a negative relief of a tire tread design to be molded, the tread model molding member and the digital model of the molding member include corresponding features of the tread to be molded. For example, in instances where a tire tread is designed to have one or more void features extending into a thickness of the tread, the digital model of the tread model molding member includes a projection corresponding to a void feature to be molded into the tread. Void features include, for example, sipes and grooves. It is understood that certain structure may be added to the tread model molding member after its formation, such as sipe-forming elements, which will be discussed further below.

It is understood that building the three-dimensional structure may be achieved by any known process or device for automatically building a physical, three-dimensional structure from one or more materials, where the one or more materials includes an elastic material. In particular embodiments, for example, three-dimensional rapid prototyping or printing techniques may be employed to build or construct the three-dimensional structure from a plurality of sections. Accordingly, in particular embodiments, the step of forming automatically the three-dimensional structure comprises building the three-dimensional structure from a plurality of sections, each of the sections being formed from the one or more materials. In more specific variations this step of forming, the plurality of sections comprise a plurality of layers. In such embodiments, a first layer is formed based upon the digital model. Thereafter, a plurality of subsequent layers are formed and arranged sequentially atop the first layer in a stacked arrangement based upon the digital model, whereby a subsequent layer is arranged atop a prior layer to form a layered structure.

In building the three-dimensional structure from a plurality of sections, such as layers, in particular embodiments, the digital model is created to include the plurality of sections. Accordingly, in more particular instances, in the step of creating the digital model, the digital model is formed to represent a three-dimensional structure having a plurality of layers, each of the layers being formed from one or more materials. It is also understood, however, that a digital model representing a monolithic three-dimensional structure may be first created, and subsequently manipulated or transformed into a digital model having a plurality of sections. This may be performed by a device used to form the physical three-dimensional structure, as the device prepares to form the structure subsequent to receiving the digital model. In such instances, the device includes a logical processor for performing these operations, the logical processor comprising any processor contemplated herein for use in creating the digital model. Accordingly, a memory storage device is also employed to retain a software program containing code or instructions capable of performing the manipulation or transformation of the monolithic digital model. While the layers may be of any desired thickness, in particular embodiments a rapid prototype printer builds the three-dimensional structure from approximately 30 micrometer thick layers. The thickness of each layer may be increased or decrease to accommodate less or more complex structures. Of course, the manipulation and transformation may occur on a separate device, such that a sectioned digital model is received from the device employed for forming the three-dimensional structure.

In particular instances, each layer of the three-dimensional structure is formed by initially depositing the one or more materials in an uncured form, and subsequently curing each of the one or more materials in the step of forming. After initially depositing each of the one or more materials in an uncured form, the one or more materials are cured to both solidify the layer and to bond the layer to any adjacent layer. In certain instances, the one or more materials are cured as each layer is being applied, or after each layer has been fully deposited. In curing the layer after full deposition, the layer may be cured before or as any subsequent layer is being applied, or may be cured after a partial or full quantity of uncured layers have been deposited to form the three-dimensional structure. Curing may occur by exposing the uncured material to a heat or light source, such as an ultraviolet light source.

Because the one or more materials used to form each of the one or more layers is an elastic material having elastic properties, the three-dimensional structure formed is a layered, elastic structure. In exemplary alternative embodiments, each layer is separately formed prior to formation of the three-dimensional structure, where the plurality of layers are subsequently assembled to form the three-dimensional structure with adhesive material arranged between adjacent layers to facilitate bonding there between. The adhesive material may be applied in an uncured form and later cured according to any known process.

It is understood that the formed three-dimensional structure is a physical representation of the digital model. This means that the physical representation may deviate slightly from the digital model. For example, variation may occur in accordance with acceptable manufacturing tolerances. By further example, slight variations may arise when the structure is formed in sections not included or identified in the digital model.

It is understood that the step of forming automatically the three-dimensional structure may be accomplished by any known process or device capable of using the digital model to build a three-dimensional structure from an elastic material. In particular embodiments, as noted above, such a device comprises a three-dimensional printer or three-dimensional rapid prototyping device. In more specific instances, for example, a three-dimensional printer comprising an Objet Connex 500 three-dimensional rapid prototyping printing system is employed to perform the step of forming. In addition to performing the step of forming automatically the three-dimensional structure, a three-dimensional prototyping or printing device may also cure each layer in any manner described herein. For example, the Objet Connex 500 cures the one or more materials forming each layer as such material is being deposited.

As stated above, the tread model molding member is formed from one or more materials. In particular, the one or more materials includes an elastic material having elastic properties. By doing so, the tread model molding member is an elastic structure having sufficient flexibility and resiliency to demold a tread model from the molding member, and hardness sufficient to control the dimensional accuracy of the molding operation. The elastic material may comprise any known material having elastic properties, such as an elastomeric material. The elastic material is also a curable material, where cross-linking occurs as the material mutates from an uncured to a cured form through a curing or vulcanization process. In particular embodiments, the elastic material comprises a liquid photopolymer resin, which is curable upon exposure to ultraviolet light. In other examples, vulcanization occurs with the application of heat or air. Because the filler material is ultimately removed from the three-dimensional structure, the filler material is configured to be separable from the one or more materials forming the three-dimensional structure. While a coating or film maybe arranged between the one or more materials and the filler material, in particular embodiments, any such elastic material is a material that is separable from the one or more materials forming the three-dimensional structure.

It is understood that the one or more materials may comprise two or more elastic materials combined to form a composition comprising a mixture of the two or more elastic materials - for the purpose of achieving a final composition characterized as having certain desired physical properties. For example, Objet provides a combination of elastomeric materials for use with the Objet Connex 500 rapid prototyping printer, the combination of materials comprising a first or primary material commercially known as TangoPlus FLX930 and a second or secondary material commercially known as VeroWhitePlus RGD835. In another variation of the combination, TangoBlackPlus FLX980 may be substituted or combined with TangoPlus FLX930 as the first or primary material. In still another variation of the combination, in any combination contemplated above, VeroClear RGD810 may be substituted for VeroWhite RGD835. While a mixture of two or more elastic materials may be formed each is applied during formation of the tread model molding member, in particular embodiments each of the elastic materials are deposited in a stacked arrangement in an uncured form. Because the materials are uncured, the initially stacked arrangement erodes as the elastic materials mix prior to curing. With regard to the Objet Connex, separate printing heads are separately employed for depositing a first material and a second material for forming the three-dimensional structure.

Regardless of the particular material or materials employed, in particular embodiments, the one or more materials forming the three-dimensional structure, or at least the elastic material, has sufficient flexibility to allow a tread model to be demolded from a tread model molding member without damaging the molding member. For example, the one or more materials forming the three-dimensional structure, or the elastic material, has a shore A hardness equal to or less than 90. By further example, such as when demolding a tread model having void-forming elements having negative draft angles, the one or more materials forming the three-dimensional structure, or the elastic material, has a shore A hardness equal to or less than 70. In more particular embodiments, the one or more materials forming the three-dimensional structure, or at least for an elastic material or a combination of elastic materials, are characterized as having a tensile strength of 0.5 to 8 megapascals (MPa) (using ASTM standard D-412), 50 to 170% elongation at break (using ASTM standard D-412), a shore A hardness of 27 to 90 (using ASTM standard D-2240), and a tensile tear resistance of 4 to 27 kilogram per centimeter (kg/cm) (using ASTM standard D-624).

In a more specific embodiment, in accordance with the same corresponding ASTM standard listed above, an elastomeric material or combination of elastomeric materials is characterized as having a tensile strength of 0.5 to 1.5 MPa, 150 to 170% elongation at break, a shore A hardness of 35 to 45, and a tensile tear resistance of 4 to 6 kilogram per centimeter (kg/cm). In yet another specific embodiment, in accordance with the same corresponding ASTM standard listed above, an elastomeric material or combination of elastomeric materials is characterized as having a tensile strength of 0.5 to 1.5 MPa, 130 to 150% elongation at break, a shore A hardness of 45 to 55, and a tensile tear resistance of 5 to 7 kilogram per centimeter (kg/cm). In still another specific embodiment, in accordance with the same corresponding ASTM standard listed above, an elastomeric material or combination of elastomeric materials is characterized as having a tensile strength of 2 to 4 MPa, 80 to 100% elongation at break, a shore A hardness of 55 to 65, and a tensile tear resistance of 7 to 9 kilogram per centimeter (kg/cm). In another specific embodiment, in accordance with the same corresponding ASTM standard listed above, an elastomeric material or combination of elastomeric materials is characterized as having a tensile strength of 2 to 4 MPa, 50 to 70% elongation at break, a shore A hardness of 65 to 75, and a tensile tear resistance of 12 to 14 kilogram per centimeter (kg/cm). In another specific embodiment, in accordance with the same corresponding ASTM standard listed above, an elastomeric material or combination of elastomeric materials is characterized as having a tensile strength of 4 to 8 MPa, 50 to 60% elongation at break, a shore A hardness of 80 to 90, and a tensile tear resistance of 25 to 27 kilogram per centimeter (kg/cm).

According to the invention, the step of forming includes, in addition to arranging one or more materials to form automatically the three-dimensional structure comprising a tread model molding member, arranging filler material at any location within the tread model molding member corresponding to a void location in the digital model, which is subsequently removed after formation of the tread model molding member (that is, the three-dimensional structure). In doing so, the filler material may both support the material forming the structure to preserve the dimensional accuracy of the molding cavity within the tread model molding member. The filler material may comprise any material capable of becoming solid and of removal from the tread model molding member after its formation. For example, the filler material may be a rigid material, a frangible material, or a water-soluble material. In particular embodiments, such as when employing a three-dimensional rapid prototyping printer, a urethane-based photopolymer is first deposited in an uncured form and later cured by an ultraviolet light source. Subsequently, after the tread model molding member has been formed, the filler material is removed from the molding member. In doing so, the filler material is separated and dislodged from the tread model molding member. Removal of the filler material may be achieved by any desired means or process, such as using any tool or a water-jet to remove the filler material from the three-dimensional structure. It is understood that removal of the filler material may be achieved manually, selectively, or automatically.

Once the tread model molding member has been formed, additional structure may be added to the tread model molding member. For example, in particular embodiments, removably attaching one or more sipe-forming elements to the tread model molding member for the purpose of transferring the sipe-forming elements to the tread model molded in the molding member. Attachment of the sipe-forming element comprises inserting a sipe-forming element into an element-receiving cavity formed in the molding member, the element-receiving cavity being configured to receive each sipe-forming element such that a portion of the sipe-forming element extends outwardly from the element-receiving cavity and into the molding cavity by a distance corresponding to a depth of each sipe to be formed in the molded tire tread. Accordingly, when molding the tread model, the sipe-forming elements are secured within the tread model for ultimate transfer to final tread molding element of the tire-related mold.

Once the tread model molding member has been formed, and any additional structure added to the molding member, molding material for forming the tread model is arranged within the molding cavity of the tread model molding member. In doing so, such methods for developing and forming a tire-related mold include molding a tread model using the tread model molding member. It is understood that the molding material may comprise any known material for forming a tread model. In particular embodiments, for example, the molding material comprises plaster. After the molding material hardens, the tread model is demolded from the flexible molding member, which may be deformed as needed to navigate more complex features within the tread model, such as grooves having negative sidewall draft angles.

Upon formation of the tread model, the prior process of forming a tread molding element of tire-related mold resumes, where the tread model is used to mold a tread molding element for a tire-related mold. In particular, the tread model operates as a positive mold member, as a rigid, high-temperature resistant molding material is arranged along an outer surface of the tread model to form the tread molding element. In doing to, the tread model is fractured to release any sipe-molding elements from the tread model to thereby transfer any such sipe-molding elements to the tread molding element. It is understood that the rigid, high-temperature molding material may comprise any desired material configured to generally maintain its structural integrity and rigidity when exposed to the curing temperatures employed for tire or tire tread molding operations. For example, such a molding material includes aluminum or steel. Finally, in particular embodiments, where the tread molding element is one of a plurality of tread molding elements arranged to form a tire-related mold comprising a tire mold, portions of the tread molding element may be removed or trimmed to better fit and coordinate the tread molding element with adjacent tread molding elements to form and assemble the tire-related mold. The steps discussed above may be repeated to form additional tread molding elements to complete the tire mold.

Such methods will now be discussed in accordance with particular exemplary embodiments and in conjunction with the figures.

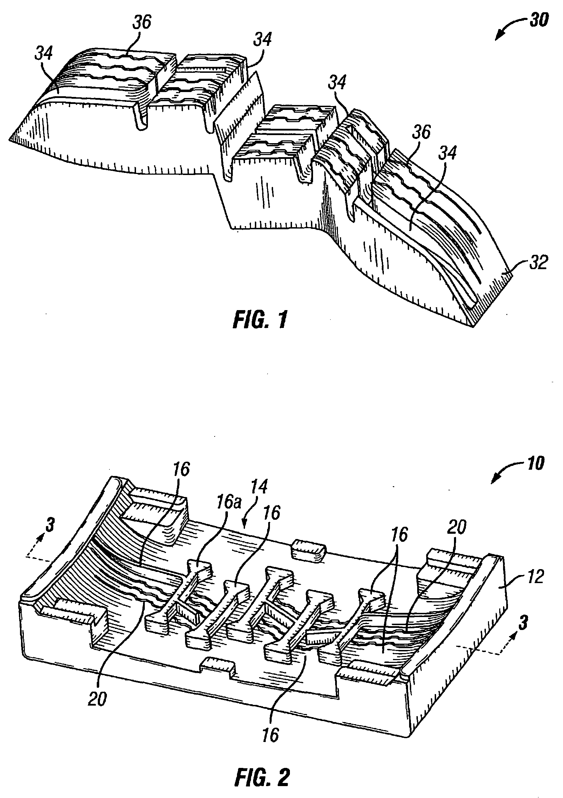

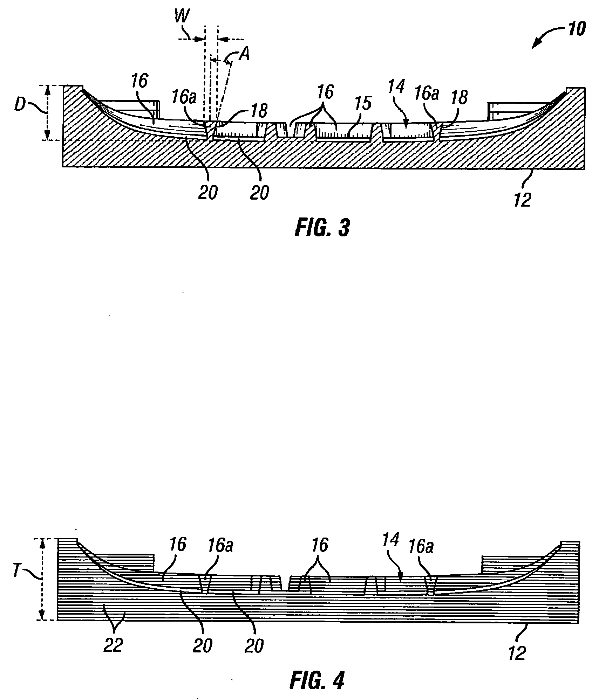

As discussed above, a digital model representing a three-dimensional structure comprising a tread model molding member, the digital model being created for the purpose of forming automatically a physical. With reference to an exemplary embodiment in FIGS. **2** and **3****,** a digital model **10** is graphically shown representing a tread model molding member **12,** the digital model including a molding cavity **14** having a depth **D** for forming a tread model. The molding cavity **14** may include any feature for forming a corresponding feature in the tread model. In the embodiment shown, the molding cavity **14** includes void feature-forming members **16** configured to form any corresponding void feature in the tread model. With particular reference to FIG. 3, particular void feature-forming members **16a** are shown to include a sidewall **18** having a negative draft angle **A,** where the sidewall extends or tapers outwardly from a centerline of the void feature-forming member (or from any reference line or plane extending perpendicular to a widthwise direction or width of the tread model molding member, the widthwise direction extending perpendicular to the lengthwise direction or length of the tread model molding member) as the void feature-forming member extends lengthwise from the bottom of, or into, the molding cavity and towards a terminal, free end of the member. In such instances, such as when both opposing sidewalls defining the member width **W** have a negative draft angle **A** (such as is shown), the member has a width **W** that increases as the member increases in length from the bottom of, or into, the molding cavity. In such instances, the void feature-forming member forms a void feature (such as a longitudinal or lateral groove) that widens as the depth of the void feature increases. While the negative draft angle **A** may comprise any desired angle, in particular embodiments, for example, angle **A** is at least equal to 9 degrees. In more specific embodiments, draft angle is at least equal to 9 degrees and up to 12 degrees. Draft angles greater than 12 degrees, and less than 9 degrees may also be employed as desired, although the greater angles may increase demolding difficulty and the lesser angles may reduce demolding difficulty.

As discussed above, a digital model of a tire tread may be employed to generate the digital model of a tread model molding member, where the tire tread and the tread model molding member are associated as male and female counterparts where reciprocal features of the digital tread design included in the digital tread model molding member. With reference to FIG. **1****,** an exemplary digital model **30** of a tread design **32** is shown, where the molding cavity **14** of the digital tread model molding member **12** of FIG. **1** comprises a negative relief of the digital tread model including void-feature forming members **16** corresponding to grooves **34** within the digital tread design **32.** Sipes **36** are also shown, but which are formed by separate sipe-forming elements added to the formed tread model after its formation, although it is contemplated that the sipes may be formed automatically by a three-dimensional printer or rapid prototyping device.

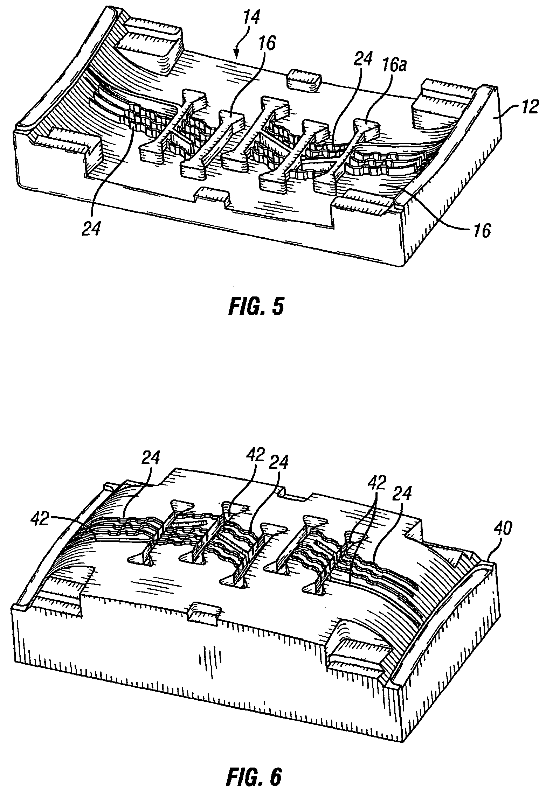

With reference to FIGS. **4** and **5****,** a tread model molding member **12** is shown after having been physically formed automatically in accordance with the methods described herein. The molding member **12** includes the molding cavity **14** and the plurality of void feature-forming members **16** as arranged in the digital model **10.** With particular reference to FIG. **4****,** the tread model molding member **12** is shown to be formed in sections according to the methods described above, where the molding member and its thickness **T** are formed of a plurality of layers **22.** Moreover, the layered tread model molding member **12** shown is formed of one or more elastic materials using a three-dimensional printer, where the elastic materials were deposited in an uncured form and subsequently cured using an ultraviolet light source. As noted above, however, other rapid prototyping devices may be employed to form the same structure or other variations thereof.

In an effort to better control the formation of more intricate, complex, or thin features in a tread, additional structure may be added to the tread model molding member subsequent to its automatic formation. For example, with reference to FIG. **5****,** sipe-forming elements may be removably attached to the tread model molding member **12** for transfer to the tread model during the molding process. To facilitate removable attachment, with reference to the embodiment of FIGS. **2** and **3****,** the mold cavity **16** also includes element-receiving cavities **20,** into which sipe-forming elements **24** are partially inserted.

With reference to FIG. **6****,** a tread model **40** is shown having been molded and subsequently demolded from the tread model molding member **12** of FIGS. **3** and **4****.** In particular, the void feature-forming members **16** of the tread model molding member **12** have been employed to form grooves **42** in the molded tread model **40.** Furthermore, the sipe-forming elements **24** are shown to have been transferred to the tread model **40** from the molding member **12** by virtue of the molding process.

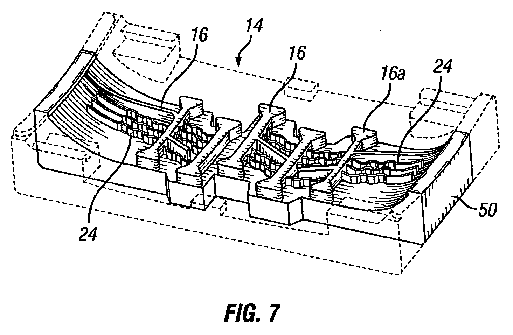

Subsequently, with reference to FIG. 7, a tread molding element **50** of a tire-related mold is molded from the tread model **40** by applying a rigid, temperature-resistant molding material to the tread model, since the tread molding element will be exposed to elevated curing temperatures employed during tire or tire tread manufacturing operations. In the demolding process, the tread model **40** is removed from the tread molding element **50** in a manner sufficient to release any sipe-forming elements **24** from the tread model such that the sipe-forming elements remain constrained within the tread molding element. Thereafter, portions of the tread molding element may be trimmed or removed to fit the molding element into the tire-related mold in a desired arrangement. Removed portions are identified by dashed lines in FIG. 7.

While this invention has been described with reference to particular embodiments thereof, it shall be understood that such description is by way of illustration and not by way of limitation. Accordingly, the scope and content of the invention are to be defined by the terms of the appended claims.

## Claims

1. A method for developing and forming a tire-related mold configured to at least mold a portion of a tire tread, the method comprising:
creating a digital model (30) representing a three-dimensional structure comprising a tread model molding member (12), the tread model molding member (12) at least partially defining a molding cavity (14) for forming a corresponding tire tread model; forming automatically the three-dimensional structure comprising the tread model molding member (12) using the digital model (10), the structure being formed by building the structure from one or more materials, the one or more materials including an elastic material such that the formed structure is an elastic structure and arranging filler material at any location within the tread model molding member (12) corresponding to a void location in the digital model, which is subsequently removed after formation of the three-dimensional structure;
molding a tread model (40) using the tread model molding member (12); and,
molding a tread molding element (50) for use in forming at least a portion of a tread, the tread molding element being formed using the tread model (40).

2. The method of claim 1, where the step of forming automatically a digital model of the tread model molding member (12) includes first creating a digital model (10) of a tire tread to be molded and subsequently creating the digital model (10) of the tire tread model based upon the digital model (30) of the tire tread.

3. The method of claim 1, where the step of forming automatically the three-dimensional structure comprises building the three-dimensional structure from a plurality of sections, each of the sections being formed from the one or more materials.

4. The method of claim 3, where the plurality of sections comprise a plurality of layers (22) and where the step of forming includes forming a first layer based upon the digital model (30) and forming a plurality of subsequent layers arranged sequentially atop the first layer in a stacked arrangement based upon the digital model (30) to form a layered structure.

5. The method of claim 3, where the plurality of sections comprise a plurality of layers and where each of the plurality of layers of the three-dimensional structure is formed by initially depositing the one or more materials in an uncured form, and subsequently curing each of the one or more materials in the step of forming.

6. The method of claim 1, where the step of forming is performed by a three-dimensional printer.

7. The method of claim 1 further comprising:
attaching removably one or more sipe-forming elements (24) to the tread model molding member (12) for the purpose of transferring the sipe-forming elements (24) to the tread model (30) molded in the molding member (12).

8. The method of claim 1, where the filler material is curable and separable from the one or more materials forming the three-dimensional structure.

9. The method of claim 8, where the filler material is curable by ultraviolet light.

10. The method of claim 9, where the filler material is a urethane-based photopolymer.

11. The method of claim 1, where the filler material is removed using a water-jet.

12. The method of claim 1, where the one or more materials comprise two or more elastic materials combined to form a composition comprising a mixture of the two or more elastic materials.

13. The method of claim 1, where the elastic material is a photopolymer resin.

14. The method of claim 1, where the elastic material is curable by ultraviolet light.

## Patentansprüche

1. Verfahren zum Entwickeln und Ausbilden einer Form für Reifen, welche konfiguriert ist, um wenigstens einen Abschnitt eines Reifenprofils zu gießen, wobei das Verfahren umfasst:
Erzeugen eines digitalen Models (30), welches eine dreidimensionale Struktur darstellt, die ein Profilmodellgussformelement (12) umfasst, wobei das Profilmodellgussformelement (12) wenigstens teilweise eine Gussausnehmung (14) zum Ausbilden eines entsprechenden Reifenprofilmodells definiert;
automatisches Ausbilden der dreidimensionalen Struktur, wobei sie das Profilmodellgussformelement (12) umfasst, unter Verwendung des digitalen Modells (10) eines Reifenprofils, das durch Bauen der Struktur aus einem oder mehreren Materialien, wobei das eine oder die mehreren Materialien ein elastisches Material aufweist, so dass die ausgebildete Struktur eine elastische Struktur ist, und durch Anordnen von Füllermaterial an jeder Stelle im Profilmodellgussformelement (12) ausgebildet wird, welche einer Leerstelle im digitalen Modell entspricht, welche nachfolgend nach Ausbildung der dreidimensionalen Struktur entfernt wird;
Ausformen eines Profilmodells (40) unter Verwendung des Profilmodellgussformelements (12); und
Ausformen eines Profilgusselements (50) für den Einsatz beim Ausformen wenigstens eines Profilabschnitts, wobei das Profilmodellgussformelement unter Verwendung des Profilmodells (40) ausgeformt wird.

2. Verfahren nach Anspruch 1, wobei der Schritt des automatischen Ausformens eines digitalen Modells des Profilmodellgussformelements (12) zuerst das Erzeugen eines digitalen Modells (10) eines Reifenprofils, das gegossen werden soll, und nachfolgend das Erzeugen des digitalen Modells (10) des Reifenprofilmodells auf der Grundlage des digitalen Modells (30) des Reifenprofils umfasst.

3. Verfahren nach Anspruch 1, wobei der Schritt des automatischen Ausformens der dreidimensionalen Struktur das Bauen der dreidimensionalen Struktur aus einer Vielzahl von Abschnitten umfasst, wobei jeder der Abschnitte aus einem oder aus mehreren Materialien ausgeformt ist.

4. Verfahren nach Anspruch 3, wobei die Mehrzahl der Abschnitte eine Mehrzahl von Schichten (22) umfasst und wobei der Schritt des Ausformens das Ausformen einer ersten Schicht auf der Grundlage des digitalen Modells (30) und das Ausformen einer Mehrzahl von nachfolgenden Schichten, die aufeinanderfolgend über der ersten Schicht in einer gestapelten Anordnung auf der Grundlage des digitalen Modells (30) umfasst, um eine geschichtete Struktur auszubilden.

5. Verfahren nach Anspruch 3, wobei die Mehrzahl der Abschnitte eine Mehrzahl von Schichten umfasst und wobei jede der Mehrzahl von Schichten der dreidimensionalen Struktur durch anfängliches Ablagern des einen oder der mehreren Materialien in einer nichtgehärteten Form und durch nachfolgendes Aushärten jedes der einen oder der mehreren Materialien im Schritt des Ausformens ausgebildet ist.

6. Verfahren nach Anspruch 1, wobei der Schritt des Ausformens durch einen dreidimensionalen Drucker durchgeführt wird.

7. Verfahren nach Anspruch 1, des Weiteren umfassend:
entfernbares Anbringen von einem oder mehreren Lamellen ausformenden Elementen (24) am Profilmodellgussformelements (12) für den Zweck des Übertragens der Lamellen ausformenden Elemente (24) auf das Profilmodell (30), das im Gussformelement (12) ausgeformt ist.

8. Verfahren nach Anspruch 1, wobei das Füllermaterial härtbar und trennbar von dem einen oder den mehreren Materialien ist, welche die dreidimensionale Struktur ausformen.

9. Verfahren nach Anspruch 8, wobei das Füllermaterial durch ultraviolettes Licht härtbar ist.

10. Verfahren nach Anspruch 9, wobei das Füllermaterial ein Urethan basiertes Photopolymer ist.

11. Verfahren nach Anspruch 1, wobei das Füllermaterial durch Verwendung eines Wasserstrahls entfernt wird.

12. Verfahren nach Anspruch 1, wobei das eine oder die mehreren Materialien zwei oder mehrere elastische Materialien umfasst, die kombiniert werden, um eine Zusammensetzung auszubilden, die eine Mischung der zwei oder mehreren elastischen Materialien umfasst.

13. Verfahren nach Anspruch 1, wobei das elastische Material ein Photopolymerharz ist.

14. Verfahren nach Anspruch 1, wobei das elastische Material durch ultraviolettes Licht härtbar ist.

## Revendications

1. Procédé pour élaborer et réaliser un moule pour pneumatique conçu pour au moins mouler une partie d'une bande de roulement d'un pneumatique, le procédé comportant :
la création d'un modèle numérique (30) représentant une structure tridimensionnelle comprenant une pièce de moulage (12) de modèle de bande de roulement, la pièce de moulage (12) de modèle de bande de roulement définissant au moins partiellement une cavité de moulage (14) pour former un modèle correspondant de bande de roulement de pneumatique ;
la réalisation automatique, à l'aide du modèle numérique (10), de la structure tridimensionnelle comprenant la pièce de moulage (12) de modèle de bande de roulement, la structure étant réalisée en construisant la structure à l'aide d'une ou de plusieurs matières, la/les matière(s) comprenant une matière élastique telle que la structure réalisée soit une structure élastique et en mettant en place une matière formant charge à tout endroit dans la pièce de moulage (12) de modèle de bande de roulement correspondant à l'emplacement d'un vide dans le modèle numérique, laquelle est ensuite retirée après la réalisation de la structure tridimensionnelle ;
le moulage d'un modèle de bande de roulement (40) à l'aide de la pièce de moulage (12) de modèle de bande de roulement ; et
le moulage d'un élément de moulage (50) de bande de roulement destiné à servir à former au moins une partie d'une bande de roulement, l'élément de moulage de bande de roulement étant réalisé à l'aide du modèle de bande de roulement (40).

2. Procédé selon la revendication 1, dans lequel l'étape de création automatique d'un modèle numérique de la pièce de moulage (12) de modèle de bande de roulement comprend tout d'abord la création d'un modèle numérique (10) d'une bande de roulement de pneumatique à mouler, puis la création du modèle numérique (10) du modèle de bande de roulement de pneumatique d'après le modèle numérique (30) de la bande de roulement de pneumatique.

3. Procédé selon la revendication 1, dans lequel l'étape de réalisation automatique de la structure tridimensionnelle comprend la construction de la structure tridimensionnelle à partir d'une pluralité de sections, chacune des sections étant réalisée avec la/les matière(s).

4. Procédé selon la revendication 3, dans lequel la pluralité de sections comprend une pluralité de couches (22) et dans lequel l'étape de réalisation comprend la réalisation d'une première couche d'après le modèle numérique (30) et la réalisation d'une pluralité de couches suivantes disposées successivement par-dessus la première couche suivant une disposition superposée d'après le modèle numérique (30) pour former une structure stratifiée.

5. Procédé selon la revendication 3, dans lequel la pluralité de sections comprend une pluralité de couches et dans lequel chaque couche de la pluralité de couches de la structure tridimensionnelle est réalisée d'abord en déposant la/les matière(s) sous une forme non durcie, puis en faisant durcir la matière/chacune des matières lors de l'étape de réalisation.

6. Procédé selon la revendication 1, dans lequel l'étape de réalisation est effectuée par une imprimante trois dimensions.

7. Procédé selon la revendication 1, comportant en outre :
la fixation, d'une manière amovible, d'un ou de plusieurs élément(s) de réalisation (24) de lamelles à la pièce de moulage (12) de modèle de bande de roulement dans le but de transférer les éléments de réalisation (24) de lamelles sur le modèle de bande de roulement (30) moulé dans la pièce de moulage (12).

8. Procédé selon la revendication 1, dans lequel la matière formant charge est polymérisable et séparable de la/des matière(s) formant la structure tridimensionnelle.

9. Procédé selon la revendication 8, dans lequel la matière formant charge est polymérisable par la lumière ultraviolette.

10. Procédé selon la revendication 9, dans lequel la matière formant charge est un photopolymère à base d'uréthane.

11. Procédé selon la revendication 1, dans lequel la matière formant charge est éliminée par projection d'eau.

12. Procédé selon la revendication 1, dans lequel la/les matière(s) comprend/comprennent deux ou plus de deux matières élastiques combinées pour former une composition comprenant un mélange des deux ou plus de deux matières élastiques.

13. Procédé selon la revendication 1, dans lequel la matière élastique est une résine de photopolymère.

14. Procédé selon la revendication 1, dans lequel la matière élastique est polymérisable par la lumière ultraviolette.
